# EUROPEAN PATENT APPLICATION

(11) **EP 4 455 909 A1**
(43) Date of publication of application: **30.10.2024**
(21) Application number: 23170695.3
(22) Date of filing: 28.04.2023
(51) Int. Cl.: G06F 21/34, H04L 9/40, H04L 9/32, H04L 9/00

(54) **AUTOMATICALLY PROVIDING A CRYPTOGRAPHICAL PROOF TO VALIDATE A VERIFIABLE CREDENTIAL**

(71) Applicant: Siemens Aktiengesellschaft, 80333 München (DE)
(72) Inventor: Hofmann, Benedikt, 81739 München (DE); Shams, Saad Bin, 81549 München (DE)
(74) Representative: Siemens Patent Attorneys

(57) **Abstract**

System (20), holder unit (30) and computer-implemented method for automatically providing a cryptographical proof to validate a verifiable credential (VC), which is issued for a piece of information and stored in a holder unit (30), to a verifier unit (40), comprising following steps,
- receiving (S1), by a controller module (32) of the holder unit (30), a proof request from the verifier unit (40) to provide the cryptographical proof for the verifiable credential (VC),
by a policy evaluator module (35) of the holder unit (30)
- authenticating (S2) the verifier unit (40), and
- evaluating (S3) the extend of the piece of information for which the verifier unit (40) is allowed to request the cryptographical proof depending on a predefined policy implemented in a policy module (36) of the holder unit (30),
- providing (S4), by the controller module (32) of the holder unit (30), the cryptographical proof for the allowed extend of the piece of information to the verifier unit (40) only if the verifier unit (40) is positively authenticated and the evaluation confirms the right to retrieve the cryptographical proof.

## Description

The present invention relates to a system and a computer-implemented method for automatically providing a cryptographical proof to validate a verifiable credential, which is issued for a piece of information and stored in a holder unit, to a verifier unit.

Verifiable credentials (VC) are an open standard for digital credentials which is currently standardized in World Wide Web Consortium (W3C). A data model for verifiable credentials is "Verifiable Credentials Data Model v2.0", published August 11, 2022. Verifiable credentials are increasingly applied in many different use cases, especially industrial use cases. An entity that generates the credential is called the issuer. The credential is then given to a holder who stores it for later use. The holder can then prove something about themselves or the subject the credential is issued for by presenting their credentials to a verifier.

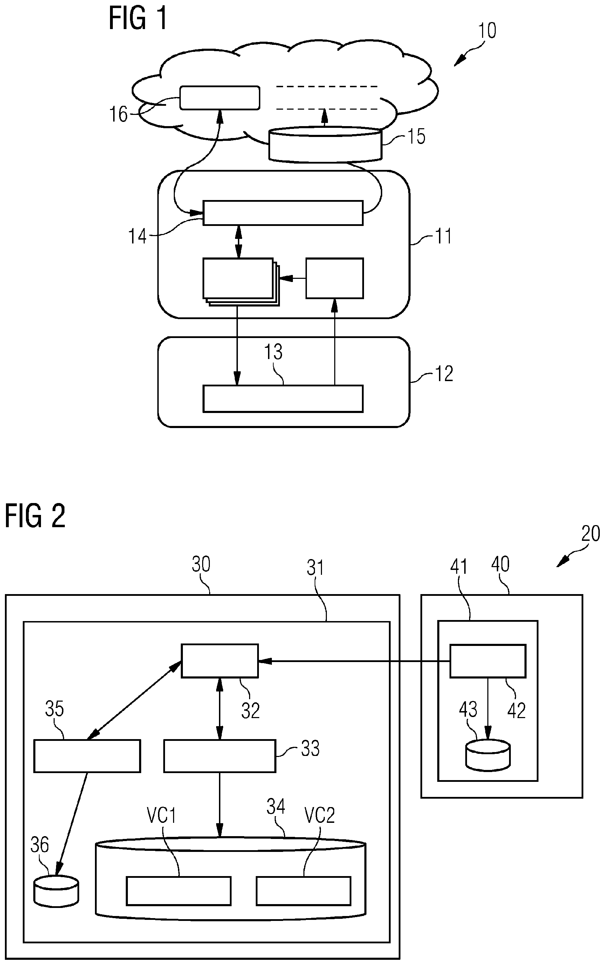

Various architectures and protocols are specified for carrying verifiable credentials from the issuer to the holder, and the holder to the verifier. One example is Hyperledger Aries architecture 10, see Fig.1, which is the current project for development of agents that allow the use of Verifiable Credentials. An agent 11 is a piece of software that implement via a controller module 12 a software wallet that aid in issuing and sharing VCs. The wallet stores the key material as well as the VCs that are issued to a holder. Fig 1. shows the architecture of an aca-py agent. The agent 11 implements all the features 14 that enable the processes of connecting, issuing and presenting VCs. The developer has to implement the controller module 12 with application business logic 13. The VCs are stored in a distributed ledger 15. The agent communicates with other agents 16 via internet.

The ideas of agents 11 and wallets origin from the context of humans and their identities. Therefore, the current approach of the agents is to design agents in a way that require human interactions. Therefore, whenever a proof is required by a verifier to take a decision, the verifier's agent sends a VC request that it is looking for before authorization or taking a decision. A typical process relies on an input from the human user to choose the VC it wants to share or to not honor the request at all. This gives control of the data in the hands of its holder.

When it comes to automated systems to share verifiable data, it is inconvenient and inefficient to rely on human input.

Suppliers receive verifiable credentials for an attribute of the supplied component, e.g., a performance value, a quality label or a Product Carbon Footprint (PCF). They can share this verifiable data with buyers so they can include this value in a design, manual or PCF calculation of their products. For instance, buyer B needs two screens of different size from supplier S. Currently, whenever buyer B requests a product carbon footprint of a screen, an employee of supplier S must interact with a wallet which stores the verifiable credentials issued for the carbon footprint of the screens and must approve a proof request. With a growing number of proof requests from different suppliers and for different attribute of the supplied component this workload quickly gets out of hand.

In the context of humans, individual approvals of a verifiable credential assigned for the human work well, as humans are self-sovereign and can usually control their own data. Yet, automated systems usually are characterized by frequent exchanges. With the currently available technology, human intervention would require taking decisions on what to share and what not to share. This process is manual or not fully autonomous in current systems at best.

It is therefore an objective of the present invention to enable an automated approval of a proof request for a verifiable credential.

The objective is solved by the features of the independent claims. The dependent claims contain further developments of the invention.

A first aspect of the invention concerns a computer-implemented method for automatically providing a cryptographical proof to validate a verifiable credential, which is issued for a piece of information and stored in a holder unit, to a verifier unit, comprising following steps,
- receiving, by a controller module of the holder unit, a proof request from the verifier unit to provide the cryptographical proof for the verifiable credential,
- authenticating the verifier unit to access the verifier unit,
- evaluating the extend of the piece of information for which the verifier unit is allowed to request the cryptographical proof depending on a predefined policy implemented in a policy module of the holder unit,
   both steps performed by a policy evaluator module of the holder unit, and
- providing, by the controller module of the holder unit, the cryptographical proof for the allowed extend of the piece of information to the verifier unit only if the verifier unit is positively authenticated and the evaluation confirms the right to retrieve the cryptographical proof.

In the above-described example, the piece of information represents the carbon footprint of a screen. The extend of the piece of information would be the PCF values for all currently ordered screens. The extend of the piece of information could also concern the granularity of the provided proof, e.g., an exact value or a value range or an upper limit of the PCF value of the screen. The verifiable credential is structured according to a specification of the World Wide Web Consortium (W3C).

The policy evaluator module can reach decisions autonomously depending on the policy's content without human intervention. This reduces the required effort to operate and maintain a wallet, which generates the proof to a minimum. Once the policy is set up, the proofs can be presented to the verifier units automatically. This would reduce the human intervention to the cases when the requirements or policies change.

In a preferred embodiment the policy evaluator module requests additional data from the verifier unit for authenticating the verifier unit and/or for evaluating the extend of in to retrieve the cryptographical proof.

This feature improves the flexibility of the authentication and evaluation process in that additional data required to evaluate the policy can be retrieved from the verifier. The policy may include various rules and criteria which are evaluated and compared with respect to data of the verifier.

In a preferred embodiment the policy evaluator module provides to the controller module an affirmation whether the pieces of information of the verifiable credential is allowed to be shared with the verifier unit and/or an affirmation to what extend it is shared with the verifier unit.

These two affirmations are used in the controller module 32 to generate the proof from the wallet connector. This provides sufficient information to specify the content of the proof.

In a preferred embodiment the cryptographical proof is generated by a controller module of the holder unit.

This enables an efficient communication and processing of the cryptographical proof.

In a preferred embodiment the controller module requests a wallet module of the holder unit to generate the cryptographical proof by sending the affirmations to share the verifiable credential and the extend of the piece of information of the verifiable credential.

This enables the controller module of the holder unit to generate a cryptographical proof specific for each verifier unit requesting the proof.

In a preferred embodiment a notification is output to a user interface of the verifier unit if the authentication of the verifier unit fails and/or the evaluation results in no right to retrieve the cryptographical proof for the verifier unit.

This informs the verifier unit on a negative result of the proof request. The verifier unit can evaluate the provided notification and conclude further actions. This feature enhances the flexibility for the verifier unit to react in case of a negative authentication or negative evaluation result.

In a preferred embodiment the policy comprises rules defined by a holder of the holder unit.

Thus, individual policies can define rules and criterions tailored according to the need and requirements of different holders.

In a preferred embodiment the policy is configured as a structured file or a database.

This provides the possibility to setup the policy comprising verifier-specific policies containing different sets of attributes within a wide range of attributes.

In a preferred embodiment the policy module is accessed from the policy evaluator module via an application programming interface.

The application programming interface provides at least a set of standardized features and requires low adaptation effort.

In a preferred embodiment the policy can be updated with a new verifier unit and/or with a new allowed extend of the piece of information.

This allows a flexible adaptation of the policy. The update provides fast adaptation of the policy especially in case the authentication of the verifier unit fails and/or the evaluation results in no right to retrieve the cryptographical proof for the verifier unit. In reaction the holder unit can setup a new or modified policy for this verifier unit.

In a preferred embodiment the policy is updated after receiving a confirmation of a holder of the holder unit and any further proof request of the new verifier unit and/or the new allowed extend of the piece of information is evaluated without interaction of the holder unit.

In a preferred embodiment the verifier unit provides for authentication to the holder unit the verifiable credential issued by a trusted issuer unit, or a digital certificate according to X.509 specification issued by a trusted certification authority, or the verifier unit provides for authentication to the holder unit an authorization token.

This provides flexibility by supporting different authentication procedures in the process of providing a proof.

In a preferred embodiment the verifiable credential is structured according to a specification of the World Wide Web Consortium (W3C), preferably according to a Verifiable Credentials Data Model v2.0.

A second aspect of the invention concerns a system for automatically providing a cryptographical proof to validate a verifiable credential, which is issued for a piece of information and stored in a holder unit, to a verifier unit, comprising a holder unit and a verifier unit configured to
- receive (S1), by a controller module of the holder unit, a proof request from the verifier unit (11) to provide the cryptographical proof for the verifiable credential,
   by a policy evaluator module of the holder unit
- authenticate the verifier unit to access the verifier unit, and
- evaluate the extend of the piece of information for which the verifier unit is allowed to request the cryptographical proof depending on a predefined policy implemented in a policy module of the holder unit,
- provide (S4), by the controller module of the holder unit, the cryptographical proof for the allowed extend of the piece of information to the verifier unit only if the verifier unit is positively authenticated and the evaluation confirms the right to retrieve the cryptographical proof.

A third aspect concerns a holder unit for automatically providing a cryptographical proof to validate a verifiable credential, which is issued for a piece of information and stored in a holder unit, to a verifier unit, wherein the holder unit comprises a controller module, a policy evaluator module and a policy which are configured to
- receive, by a controller module of the holder unit, a proof request from the verifier unit to provide the cryptographical proof for the verifiable credential,
   by a policy evaluator module of the holder unit
- authenticate, by a policy evaluator module of the holder unit, the verifier unit to access the verifier unit, and
- evaluate, by a policy evaluator module of the holder unit, the extend of the piece of information for which the verifier unit is allowed to request the cryptographical proof depending on a predefined policy implemented in a policy module of the holder unit,
- provide, by the controller module of the holder unit, the cryptographical proof for the allowed extend of the piece of information to the verifier unit only if the verifier unit is positively authenticated and the evaluation confirms the right to retrieve the cryptographical proof.

A fourth aspect concerns a computer program product directly loadable into the internal memory of at least on one digital computer, comprising software code portions for performing the steps of the method when said product is run on said at least one digital computer.

Unless indicated otherwise in the description below, the terms "receive", "authenticate", "evaluate", "provide and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controller modules (PLCs), handheld computer systems, mobile radios and other communication devices that can process data in computer-aided fashion, as well as processors and other electronic devices for data processing.

Within the context of embodiments of the invention, a "distributed database system", which, by way of example, can also be referred to as a distributed database, can be understood to mean for example a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database.

The invention will be explained in more detail by reference to the accompanying figures.
- Fig. 1: schematically shows an example of a known architectures for exchanging and processing verifiable credentials.
- Fig. 2: illustrates an exemplary embodiment of the inventive system for automatically providing a cryptographical proof to validate a verifiable credential including an exemplary embodiment of the inventive holder unit.
- Fig. 3: shows an exemplary information flow diagram of the inventive method.
- Fig. 4: illustrates an embodiment of the inventive method by a more detailed message flow diagram.
- Fig. 5: illustrates an embodiment of the inventive method including an update of the policy by an information flow diagram.
- Fig. 6: shows a schema defining a verifiable credential for a piece of information concerning a carbon footprint of a screen.

Equivalent parts in the different figures are labeled with the same reference signs.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional blocks, devices, components or other physical or functional units could also be implemented by an indirect connection or coupling, e.g., via one or more intermediate elements. It is further noted that each functional unit described for an apparatus can perform a functional step of the related method. In the same way, each functional step described for a method can be performed in a functional unit of the related apparatus.

Fig. 2 schematically shows an exemplary embodiment of the inventive system. The system 20 comprises a holder unit 30 and a verifier unit 40. The system 20 is configured to automatically provide a cryptographical proof to validate a verifiable credential, which is issued for a piece of information and stored in the holder unit 30, to a verifier unit 40.

Holder unit 30 is an exemplary embodiment of the inventive holder and comprises an agent 31 which containing a controller module 32, which is connected via a wallet connector 33 to a wallet module. The agent 31 is extended by a policy evaluator module 35 and a policy module 35. The policy evaluator module is a decision-making component, wherein the decision depends on the policy provided by the policy module. The policy is configured as a structured file or a database file. The policy is stored in a storage of the policy module. The policy is accessed from the policy evaluator module via an application programming interface.

The policy comprises rules defined by a holder of the holder unit and represents the will of a VC holder. The policy is be written, e.g., in query language Rego. The policy evaluator module implements, e.g., an Open Policy Agent as an enforcement engine.

The policy evaluator module 35 is communicatively connected with the controller module 32 and the policy module 36. The verifier unit 40 comprises an agent 41 containing a collector module 42 and wallet module 43. The holder unit 30 and the verifier unit 40 communicate by exchanging data between the agent 31 of the holder unit 30 and the agent 41 of the verifier unit 40. The wallet modules 34 are essentially software applications that possess the ability to receive, store and share VCs. The wallet module 34 stores the verifiable credentials VC1 and VC2 issued for different pieces of information, e.g., for a screen of different type. The policy module 36 is configured to provide and store the policy comprising rules concerning the a of a piece of information, that is requested by the proof of the VC can be shared with the verifier unit.

The agents 31 of the holder unit 30 and the agent 41 of the verifier unit 40 show a typical architecture when an aca-py library is used for agent development to exchange VCs. Alternatively, an indy-sdk library can be used, where the agent only contains a wallet and an application programming interface exposed to communicate with the wallet module 34 and wallet module 43 respectively. The wallet modules 34, 43 of different companies are controlled and managed by the application platform itself. System 20 can support both scenarios, where the aca-py controller module can interact with the policy evaluator module and so can the system 20 in case it uses indy-sdk.

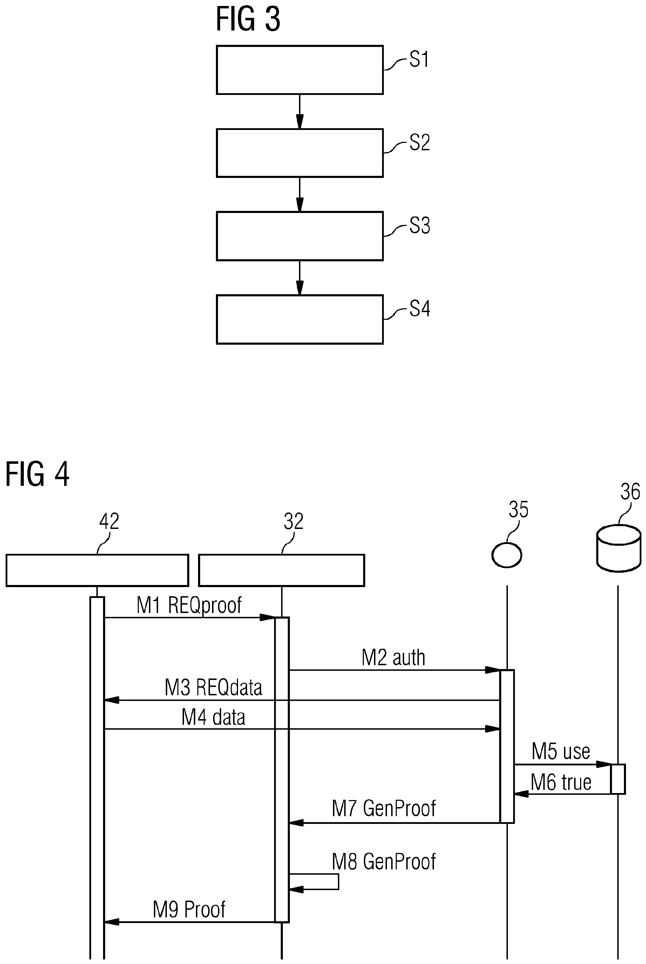

The method for automatically providing a cryptographical proof is illustrated in Fig.3 and described with reference to system 10 as described above and illustrated in Fig.2. At the starting point the verifier unit 40 wants to validate a verifiable credential, which is issued for a piece of information. The verifiable credential is stored in the holder unit 30, i.e., in the wallet module 34 of the holder unit 30.

In a first step S1 the controller module 32 of the holder unit 30 receives a proof request to provide the cryptographical proof for the verifiable credential from the verifier unit 40.
The policy evaluator module 35 of the holder unit 30 authenticates the verifier unit 40 in step S2. In step S3, the policy evaluator module 35 of the holder unit 30 evaluating the extend of the piece of information for which the verifier unit 40 is allowed to request the cryptographical proof depending on a predefined policy implemented in a policy module 36 of the holder unit 30. If the authentication results in a positive result, i.e., the verifier unit is positively authenticated and the evaluation confirms that the verifier unit 40 has the right to retrieve the cryptographical proof, the controller module 32 of the holder unit 30 provides the cryptographical proof for the allowed extend of the piece of information to the verifier unit 40.

Fig. 4 shows a more detailed message flow of the method referring as an example to the components of the system 10 shown in Fig.1.

The controller module 42 of the agents 41 of the verifier unit 40 is the component that connects to the controller module 32 of the agent 41 of the verifier unit 40 and creates or serves requests. The controller module 42 of the verifier unit 40 is the component that requests proofs from controller module 32 of the holder unit's agent 41. Thus, see M1.
the controller module 32 sends an authentication request M2 to the policy evaluator module 35. The verifier unit 40 provides for authentication to the holder unit either a verifiable credential issued by a trusted issuer unit, or a digital certificate structured according to X.509 specification issued by a trusted certification authority. As a further option the verifier unit 40 provides for authentication to the holder unit an authorization token. In order to authenticate the verifier unit 40, the policy evaluator module 35 requires more information before it can reach a decision. The policy evaluator module 35 evaluates provided authentication info but requires some more information before it can reach a decision on whether the verifier unit 40 is allowed to receive a proof and to which extend data concerning the piece of information can be shared with the verifier unit 40. The policy evaluator module 35 requests additional data from the verifier unit for authenticating the verifier unit 40 and/or for evaluating the extend of in to retrieve the cryptographical proof, see M3, M4.

Once the verifier unit 40 is authenticated, the policy evaluator module 35 contacts the policy module 36, see M5 and reads the defined policy, see M6. The policy evaluator module 35 provides to the controller module 32 an affirmation, see M7, whether the pieces of information of the verifiable credential is allowed to be shared with the verifier unit and/or an affirmation to what extend it is shared with the verifier unit.

If the evaluation of the policy confirms a decision, i.e., if the verifier unit 40 is positively authenticated and the evaluation confirms the right to retrieve the confidential piece of information, see M7, the controller module 32 moves to the state of proof generation and generates the proof, see M8. The controller module 32 requests the wallet module 34 of the holder unit 30 to generate the cryptographical proof by sending the affirmations to share the verifiable credential and the extend of the piece of information of the verifiable credential. Finally, the proof is provided to the controller module 42 of verifier unit 40.

Two objects would be received by the controller module 32 from the policy evaluator module 36. One of them affirms if the VCs should be shared with the verifier unit 40. The second object asserts to what extent the information should be shared with the verifier unit 40. These two objects are used by controller to request to generate the proof from the wallet connector.

If the policy cannot be satisfied by any verifiable credential that the holder holds then no proof is provided to the verifier unit 40. In an embodiment a notification is output to a user interface of the verifier unit if the authentication of the verifier unit fails and/or the evaluation results in no right to retrieve the cryptographical proof for the verifier unit.

The policy gives the flexibility of changing the policy on the go. Furthermore, this policy can also be populated as undefined cases are faced. These undefined use cases can be added to the policy once and need not further interaction henceforth. In brief, this reduces the required effort to operate and maintain a wallet to a minimum. Once the policy is set up, the proofs can be presented to the verifiers automatically. The policy is updated after a confirmation of a holder of the holder unit 30 and any further proof request of the new verifier unit and/or the new allowed extend of the piece of information is evaluated without interaction of the holder unit. The policy can be updated for a new verifier unit and/or with a new allowed extend of the piece of information. This would
reduce the human intervention to the cases to only when the requirements or policies change.

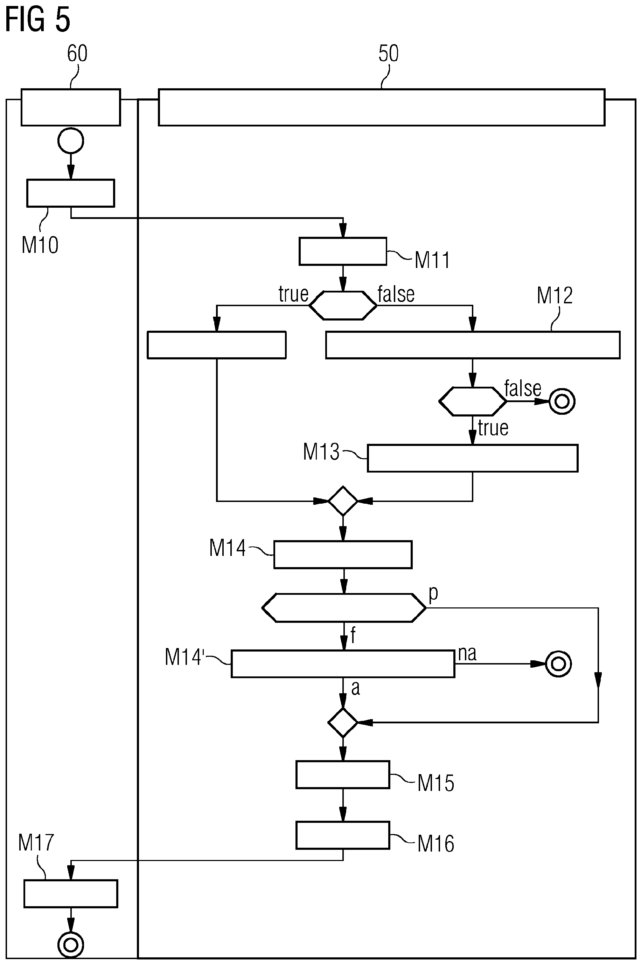

Fig. 5 shows an embodiment of interactions to update the policy during a proof request procedure by a flow diagram. A request request M10 is sent by a verifier unit 60 to a holder unit 50. The holder unit 50 authenticates the verifier unit 60, see M11. If the authentication of the verifier unit 60 fails, a indication is prompt, e.g., via an user interface at the holder unit 50 to an administrator requesting to add the verifier unit 60 as a known requestor, see M12. If it is confirmed that the verifier unit 60 shall be added, the verifier unit 60 is added to the policy of the holder unit 50, see M13. If it is not confirmed to add the verifier unit 60 the process ends.

In M14 the proof request of the verifier unit 60 is checked. If the check passes p the proof is created, see M15. If the check fails f, it is prompted M14', e.g., via the user interface at the holder unit 50, to confirm that the requested proof is added as allowed proof for the verifier unit 60. If the confirmation is not received to add the proof, see mark na, the proof is not added. If a confirmation is received, see mark a, the proof is created in M15 and sent to the verifier unit 60, see M16. The requested proof is received by the verifier unit 60, see M17 and the process ends.

Notifications can be sent to the administrator of the wallet instead of or besides to the prompts. With these notifications or prompts the holder unit 50 reacts on unknown requests which would otherwise be rejected. In this manner the holder unit 50 can add the identity of the verifier unit 60 to the list of known entities. The holder unit 50 can decide which piece of information, e.g., attributes, are provided to the verifier unit 60.

In addition, the method and system does not depend on how the verifier unit is authenticated, it depends only that it is authenticated. Meaning the verifier unit can authenticate with self-signed certificates, certificates signed by some Certification Authority, verifiable credentials, or access tokens. The holder unit can choose to place its trust in any method it prefers.

Once the holder unit 50 adds the verifier unit 60 to the known entities the kind of proof the verifier unit can request is evaluated against the policy. A further restriction can be the number of proofs of the same attribute that are presented to the same verifier unit within a certain timeframe. This further reduces the risk for unwanted disclosure.

An issuer unit which generates and provides the verifiable credential to the holder unit is specifying a credential schema, which points to a file, e.g., to a JSON-SCHEMA-2018 that can be used by a verifier unit to determine if the verifiable credential is well formed.

The issuing unit uses the simplified schema and populates the verifiable credential according to the requesting holder unit and issues the VC to reflect the piece of information of a product of the holder unit.

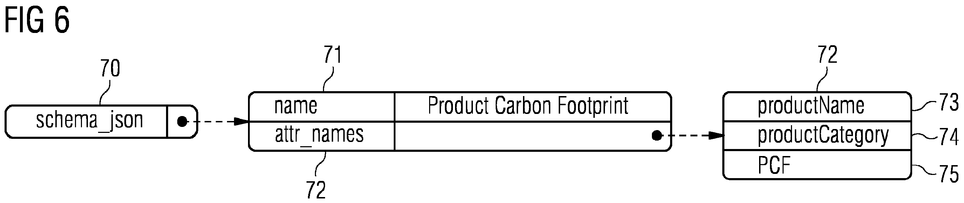

Fig. 6 shows an example of a simplified schema 70 used to track carbon footprints. In this example a VC is issued to the holder unit, e.g., for the small and big LCD screen. The issuing unit is a trusted authority in an eco-system. This role can be taken over by a governmental agency or a certification body.

The schema 70 is a data structure comprising a name of the schema 71, and at least one attribute name 72. The attribute names required by the schema 70 are, e.g., a product name 73, a product category 74 and the product carbon footprint 74. The issuing unit uses the schema 70 and populates the VC according to the requesting party usually the requesting holder unit and issues a VC to reflect the product carbon footprint of a product by the requesting holder unit.

A company A produces a product P. The product P either comprises a screen S1 or a screen S2. Supplier B which delivers the screens S1, S2 requests at an issuing unit to issue a verifiable credential according to the schema 70 for the carbon footprint. The issuing unit provides a verifiable credential VC1 for the screen S1 and a verifiable credential VC2 for the screen S2 to the holder unit of supplier B. The verifier unit of company A requests a proof for the product carbon footprint of screen S1 from the holder unit of supplier B. A policy evaluator module of the holder unit authenticates the verifier unit of company A and evaluates whether the verifier unit is allowed to get a proof and the extend of the information on the product carbon footprint depending on a policy defined for the verifier unit. For instance, the extend of information can either be a maximum value PFC value of the screen or a PFC value range. Depending on the policy, the respective proof containing the respective extend of information is generated and provided to the verifier unit of company A.

The method and system provide the basis for automated policy driven proof presentation with high flexibility. It does this while protecting the contents of the wallet from unwanted disclosure to the verifier unit.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for automatically providing a cryptographical proof to validate a verifiable credential (VC), which is issued for a piece of information and stored in a holder unit (30), to a verifier unit (40), comprising following steps,
- receiving (S1), by a controller module (32) of the holder unit (30), a proof request from the verifier unit (40) to provide the cryptographical proof for the verifiable credential (VC),
by a policy evaluator module (35) of the holder unit (30)
- authenticating (S2) the verifier unit (40), and
- evaluating (S3) the extend of the piece of information for which the verifier unit (40) is allowed to request the cryptographical proof depending on a predefined policy implemented in a policy module (36) of the holder unit (30),
- providing (S4), by the controller module (32) of the holder unit (30), the cryptographical proof for the allowed extend of the piece of information to the verifier unit (40) only if the verifier unit (40) is positively authenticated and the evaluation confirms the right to retrieve the cryptographical proof.

2. Computer-implemented method according to claim 1, wherein the policy evaluator module (35) requests additional data from the verifier unit (40) for authenticating the verifier unit (40) and/or for evaluating the extend of in to retrieve the cryptographical proof.

3. Computer-implemented method according to any of the preceding claims, wherein the policy evaluator module (35) provides to the controller module (32) an affirmation whether the pieces of information of the verifiable credential (VC) is allowed to be shared with the verifier unit (40) and/or an affirmation to what extend it is shared with the verifier unit (40).

4. Computer-implemented method according to claim 3, wherein the controller module (32) requests a wallet module (34) of the holder unit (30) to generate the cryptographical proof by sending the affirmations to share the verifiable credential (VC) .

5. Computer-implemented method according to claims 1 and 2, wherein a notification is output to a user interface of the verifier unit (40) if the authentication of the verifier unit fails and/or the evaluation results in no right to retrieve the cryptographical proof for the verifier unit (40).

6. Computer-implemented method according to any of the preceding claims, wherein the policy comprises rules defined by a holder of the holder unit (30).

7. Computer-implemented method according to any of the preceding claims, wherein the policy is configured as a structured file or a database file.

8. Computer-implemented method according to any of the preceding claims, wherein the policy is accessed from the policy evaluator module (35) via an application programming interface.

9. Computer-implemented method according to any of the preceding claims, wherein the policy can be updated for a new verifier unit and/or with a new allowed extend of the piece of information.

10. Computer-implemented method according to claim 9, wherein the policy is updated after a confirmation of a holder of the holder unit (30) and any further proof request of the new verifier unit and/or the new allowed extend of the piece of information is evaluated without interaction of the holder unit (30).

11. Computer-implemented method according to any of the preceding claims, wherein the verifier unit (40) provides for authentication to the holder unit the verifiable credential issued by a trusted issuer unit, or a digital certificate according to X.509 specification issued by a trusted certification authority, or the verifier unit provides for authentication to the holder unit an authorization token.

12. Computer-implemented method according to any of the preceding claims, wherein the verifiable credential (VC) is structured according to a specification of the World Wide Web Consortium (W3C).

13. System (20) for automatically providing a cryptographical proof to validate a verifiable credential (VC), which is issued for a piece of information and stored in a holder unit (30), to a verifier unit (40), comprising a holder unit (30) and a verifier unit (40) configured to
- receive (S1), by a controller module (32) of the holder unit (30), a proof request from the verifier unit (40) to provide the cryptographical proof for the verifiable credential (VC),
by a policy evaluator module (35) of the holder unit (30)
- authenticate the verifier unit (40), and
- evaluate the extend of the piece of information for which the verifier unit (40) is allowed to request the cryptographical proof depending on a predefined policy implemented in a policy module (36) of the holder unit (30),
- provide (S4), by the controller module (32) of the holder unit (30), the cryptographical proof for the allowed extend of the piece of information to the verifier unit (40) only if the verifier unit (40) is positively authenticated and the evaluation confirms the right to retrieve the cryptographical proof.

14. Holder unit (30) for automatically providing a cryptographical proof to validate a verifiable credential (VC), which is issued for a piece of information and stored in a holder unit (30), to a verifier unit (40), wherein the holder unit (30) comprises a controller module (32), a policy evaluator module (35) and a policy which are configured to
- receive, by a controller module (32) of the holder unit (30), a proof request from the verifier unit (40) to provide the cryptographical proof for the verifiable credential (VC),
by a policy evaluator module (32) of the holder unit (30)
- authenticate the verifier unit (40), and
- evaluate the extend of the piece of information for which the verifier unit (40) is allowed to request the cryptographical proof depending on a predefined policy implemented in a policy module (36) of the holder unit (30),
- provide (S4), by the controller module (32) of the holder unit (30), the cryptographical proof for the allowed extend of the piece of information to the verifier unit (40) only if the verifier unit (40) is positively authenticated and the evaluation confirms the right to retrieve the cryptographical proof.

15. A computer program product directly loadable into the internal memory of at least one digital computer, comprising software code portions for performing the steps of claims 1 - 12 when said product is run on said at least one digital computer.
